# EUROPEAN PATENT SPECIFICATION

(11) **EP 2 712 779 B1**
(45) Date of publication and mention of the grant of the patent: **16.09.2020**
(21) Application number: 12006806.9
(22) Date of filing: 28.09.2012
(51) Int. Cl.: B60T 7/04, B60T 17/22

(54) **Method for operating a self propelled agricultural machine**
Verfahren zum Betrieb einer selbstangetriebenen Landwirtschaftsmaschine
Procédé pour faire fonctionner une machine agricole autopropulsée

(43) Date of publication of application: 02.04.2014
(73) Proprietor: CLAAS Tractor S.A.S., 78141 Vélizy-Villacoublay Cedex (FR)
(72) Inventor: Gomez, Christophe, 92100 Boulogne Billancourt (FR)
(74) Representative: Gottschald, Jan

(56) References cited:
- DE-A1-102005 002 241
- DE-A1-102009 016 732
- DE-U1- 20 101 915
- DE-U1- 20 315 755
- US-A1- 2003 085 612

## Description

The invention concerns a method for operating a self propelled agricultural machine according to the preamble of claim 1, a self propelled agricultural machine according to the preamble of claim 12 and a control for a self propelled agricultural machine according to the preamble of claim 13.

The agricultural machine in the sense of the invention may be of any kind. Examples are tractors or self propelled harvesting machines.

The known agricultural machine (DE 203 15 755 U1), which is considered the closest prior art, comprises a traction drive for generating a driving movement and a service brake for braking of the driving movement.

The known agricultural machine also comprises a man machine interface including an accelerator pedal for influencing the speed and/or the torque of the driving movement provided by the traction drive and a brake pedal for operating the service brake.

A trailer with a trailer brake system is attached to the known agricultural machine. The trailer brake system is being operated automatically when the accelerator pedal is being retracted by the user. Although this method of automatically triggering braking operations based on the user actuation of the accelerator pedal may lead to an improved braking effect, it may also have a surprising effect on the user as he may or may not have expected this automatism. In some cases this may lead to a panic reaction of the user and in the end to a dangerous situation.

It is also known to dry the brakes of a non agricultural, stand alone motor vehicle upon the retraction of the accelerator pedal (DE 10 2009 016 732 A1), in order to improve a braking process to follow.

The problem of the invention lies in improving the known method in view of a user-optimized braking strategy. The above noted problem is solved with regard to a method according to the preamble of claim 1 with the features of the characterizing part of claim 1.

The invention is based on the general idea that certain user actuations indicate a high probability for the user actuating the brake pedal in the very near future. Such an indication for an approaching user actuation of the brake pedal, which is called "brake indication" in the following, may be the quick release of the accelerator pedal as is to be explained.

It is now proposed to detect whether a predetermined brake indication for an approaching user actuation of the brake pedal is present and, if yes, only to prepare the agricultural machine for the expected user actuation of the brake pedal. For this at least one preparatory measure is being taken by the control which preparatory measure taken alone does not have a braking effect on the agricultural machine. This makes sure that the user is not surprised by a braking effect without him actuating the brake pedal.

The above noted preparatory measure is being triggered by the detection of a brake indication. In detail, the user actuation, preferably the user actuation of the accelerator pedal, is being monitored by the control in view of the detecting such brake indication. The control preferably comprises a memory for at least one brake indication, preferably a number of brake indications.

According to the invention certain user activities, that are normally followed by a user actuation of the brake pedal, lead to triggering at least one preparatory measure for the preparation of such user actuation of the brake pedal, however, without actually performing a braking operation. With an appropriate design it is possible with the preparatory measure to improve the braking effect, the braking safety or the like without the user being surprised by an unannounced braking operation.

An easy to detect a brake indication is subject of claim 3. For example, a very quick release of the accelerator pedal is a reliable brake indication that only requires providing the brake pedal with a simple sensor. The brake indication of a quick release of the accelerator pedal is reliable in view an user actuation of the brake pedal actually following the brake indication. However, it may happen, that the user slips from the accelerator pedal by mistake which may be detected as an above noted brake indication. Here it is of particular advantage that the preparatory measure taken alone, as noted above, does not have a braking effect on the agricultural machine. Therefore no unwanted brake operation will take place in such a case.

Depending on the preparatory measure that has been triggered after detecting an above noted brake indication it may be necessary to stop or withdraw the preparatory measure at a certain point. For this at least one reset condition is defined, which detection by the control leads to the preparatory measure being stopped or being withdrawn (claim 4). This ensures that the agricultural machine is always reset to an initial state at some point.

Claims 5 to 10 are directed to a number of advantageous measures that are being triggered by the detection of an above noted brake indication.

According to claim 5 the preparatory measure is directed to supporting the expected operation of the service brake. Such a measure includes all actions that make the braking process itself more effective. Preferably this measure is directed on a corresponding configuration of the drive train or the suspension of the agricultural machine.

In particular in the case when only the back wheels of tractor or the like are brakable the preparatory measure may be to close a four wheel drive clutch such that the braking effect on the back wheels is transferred to braking the front wheels. The closing of the four wheel drive clutch taken alone does not have a braking effect on the agricultural machine as noted above (claim 6).

The preparatory measure may also be directed to configuring the agricultural machine by the control to improve the passenger crash safety, in particular by configuring the passive safety system of the agricultural machine (claim 8). According to the preferred embodiment of claim 9 this configuring may include the movement of a headrest or the like into its safety position.

A second teaching according to claim 12 is directed to a self propelled agricultural machine as noted above. All explanations concerning the first teaching are fully applicable to this second teaching as far as they are suitable for describing the agricultural machine itself.

A third teaching according to claim 13 a control for a self propelled agricultural machine as such is claimed. Again, all explanations given for the first two teachings are fully applicable to the control according to claim 13 as far as they are suitable for describing the control itself.

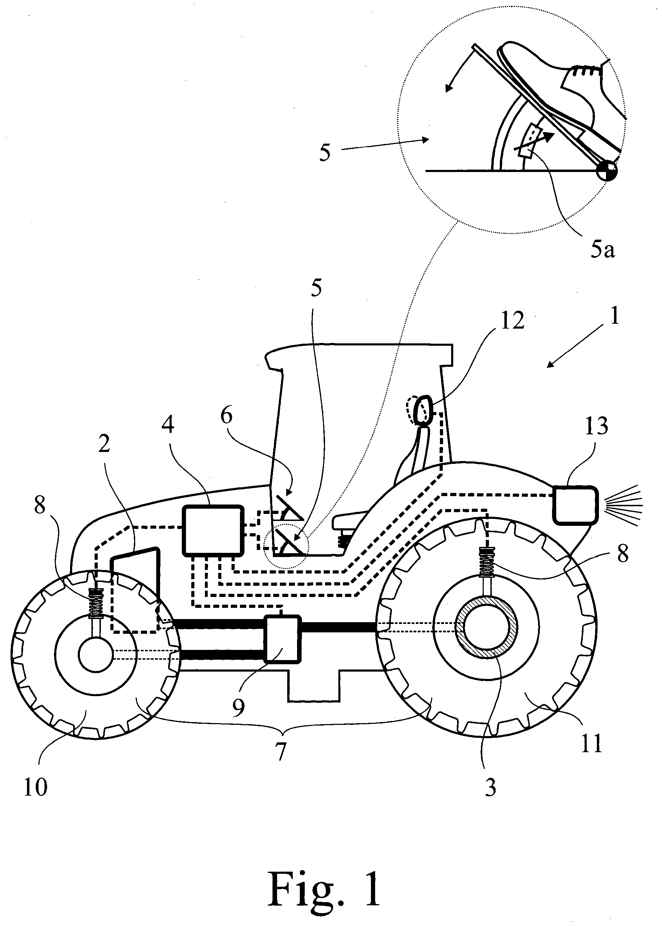

In the following, the invention shall be further explained in detail with reference to an illustration showing a single embodiment of the invention. The only figure shows an agricultural machine as proposed in a schematic side view.

The self propelled agricultural machine 1 shown in the only figure comprises a traction drive 2 for providing driving movement of the agricultural machine 1 and a service brake 3 for braking the driving movement of the agricultural machine 1.

The agricultural machine 1 is further provided with a control 4 that may be of centralized structure as shown in the figure as well as of decentralized structure. The control 4 is preferably an electronic control that triggers various electric or electronic components of the agricultural machine 1.

The agricultural machine 1 further comprises a man machine interface including at least an accelerator pedal 5 and a brake pedal 6. Other components of the man machine interface are not shown in the figure, namely components as a steering wheel, a display or the like.

A user actuation of the accelerator pedal 5 allows the user control of the driving speed and/or driving torque. This may be realized by the actuation of the accelerator pedal 5 influencing the engine speed of the traction drive 2 or influencing the control of a transmission, in particular influencing the gear transmission ratio of a transmission, for example of a continuously variable transmission (CVT-transmission).

A user actuation of the brake pedal 6 causes the service brake 3 to be operated. Up to this point the agricultural machine 1 comprises a standard structure.

Particularly interesting is now that the user actuation, here and preferably the user actuation of the accelerator pedal 5, is being monitored by the control 4 in view of detecting a predetermined indication for an approaching user actuation of the brake pedal 6. For this, preferably, the accelerator pedal 5 is provided with a sensor 5a which is shown in the detail view of the figure. This sensor 5a may be an analogue sensor which gives an indication which distance the accelerator pedal 5 has travelled. Generally any kind of sensor may be applied here, that gives a signal related to the movement of the accelerator pedal 5. A brake indication would be here, for example, a quick release of the accelerator pedal 5, as will be explained further down.

With the brake indication being detected by the control 4 at least one preparatory measure is being taken by the control 4 for the preparation of a user actuation of the brake pedal 6.

A further interesting aspect of the proposed solution is the fact that any above noted preparatory measure taken alone does not have a braking effect on the agricultural machine 1. Accordingly there will be no surprising brake operation if no user actuation of the brake pedal 6 follows the detection of a brake indication. Generally it is possible that one and the same preparatory measure is being taken when the control 4 has detected a brake indication. However, it is preferred, that different preparatory measures and different brake indications are defined. In this case it is advantageous if different preparatory measures are being taken by the control 4 depending on the brake indication being detected. In this regard a first indication that corresponds to an approaching emergency brake operation may lead to a first preparatory measure while a second indication corresponding to a normal brake operation would lead to a second preparatory measure. The first preparatory measure would then preferably include configuring the passive safety system in view of an expected crash situation. The second preparatory measure would be directed to a standard brake preparation, for example stiffening the suspension or the like.

There are several ways to define the above noted, predetermined brake indication. One preferred possibility is that the brake indication corresponds to a release of the accelerator pedal 5 with a predetermined accelerator pedal movement, which preferably is an accelerator pedal movement exceeding a predetermined rate of movement. In other words, a quick release of the accelerator pedal 5 may be detected as an above noted brake indication. There are other brake indications for an approaching user actuation of the brake pedal 6 possible. In particular it is possible that various parameters that are corresponding to the user actuation are being taken into account. For example a camera system may be provided to detect whether the gesture of the user reveals a stress situation that might indicate that the user is about to actuate the brake pedal 6.

Depending on the kind of preparatory measure it may be necessary to stop the preparatory measure or even withdraw the preparatory measure at some point. For this in a preferred alternative a predetermined reset condition is being detected by the control 4. When such a reset condition has been detected by the control 4 the preparatory measure is being stopped or withdrawn as noted above.

One possible and easy to realize reset condition is that no user actuation of the brake pedal 6 is being detected within a predetermined time period after detecting the brake indication 6. An alternative could be the evaluation that the expected actuation of the brake pedal 6 has taken place such that no further braking is necessary.

There are also a number of options possible for the definition of the preparatory measure.

One preferred option is the preparatory measure being directed to configuring the agricultural machine 1 by the control 4 to support the expected approaching operation of the service brake 3. This configuring of the agricultural machine 1 may be configuring the drive train 7, the suspension 8 or any other component that is suitable for supporting the expected approaching operation of the service brake 3.

Preferably, the agricultural machine 1 is designed as a four wheel drive machine with a four wheel drive clutch 9 between front wheels 10 and rear wheels 11, wherein the preparatory measure is closing the four wheel drive clutch 9 of the agricultural machine 1 by the control 4. This closing of the four wheel drive clutch 9 is positively influencing the brake effect in particular when the service brake 3 is provided only for the rear wheels or the front wheels. The tractor shown in the figure has a service brake 3 which is provided only for the rear wheels 11 such that closing of the four wheel drive clutch 9 leads to the brake operation being transferred via the four wheel drive clutch 9 to the front wheels 10. In this case it is particularly advantageous to close the four wheel drive clutch 9 before the brake operation is actually taking place. In this way the closing of the four wheel drive clutch 9 is triggered without the clutch 9 being stressed by braking forces.

As noted above a preparatory measure may be regarded to the suspension 8 of the agricultural machine as well. In one preferred option the stiffness of the suspension 8 may be configured by the control 4, wherein the preparatory measure is stiffening the suspension 8 in view of an improved brake performance.

It has also been pointed out already that the preparatory measure may be directed to configuring the agricultural machine 1 by the control 4 to improve the passenger crash safety in view of the expected approaching operation of the service brake 3. In a preferred option the preparatory measure is directed to configuring the passive safety system of the agricultural machine 1 to improve the noted passenger crash safety. The preferred embodiment shown in the figure shows a component 12, which is preferably a headrest 12 or the like, which headrest 12 is movable into a safety position by the control 4 for improving the passenger's crash safety. The preparatory measure may be here to move the headrest 12 into its safety position. The safety position of the headrest 12 is shown in a dotted line in the figure.

Another very beneficial option is to be seen in the agricultural machine 1 comprising a brake light system 13, wherein the preparatory measure is the operation of the brake light system 13 such that the brake light system 13 is operated when the brake indication has been detected. The operation of the brake light even before the user actuates the brake pedal 6 leads to an additional safety for the vehicles following the agricultural machine 1.

The proposed triggering of a preparatory measure after detecting a brake indication may advantageously be supplemented by the following:
In the case that the agricultural machine 1 comprises a trailer (not displayed) with a trailer brake system it may be advantageous that the control 4 operates the trailer brake system as a function of the monitoring of the accelerator pedal 5. In one preferred option the release of the accelerator pedal 5 may generally lead to the control 4 operating the trailer brake system actually braking the trailer.

In a preferred option it is proposed that the control 4 detecting an above noted brake indication 6 should lead to the control 4 operating the trailer brake system. Braking the trailer when the brake indication has been detected by the control 4 makes good sense here as for example the release of the accelerator pedal 5 in any case causes a certain motor brake effect. In order to prevent the trailer from pushing the agricultural machine 1 from behind the above noted operation of the trailer brake system makes good sense. Here it becomes clear that the above noted teaching with preparatory measures, that taken alone do not have a braking effect on the agricultural machine 1, does not mean that no other functions are present that provide some kind of a braking effect without the user actuating the brake pedal 6.

Finally it may be pointed out that the term "service brake" is to be understood in a broad sense. It may include a friction brake system as well as a motor brake system or an inch brake system. Accordingly, the brake pedal 6 in the above sense may be assigned to one or more of the above noted brake systems.

According to a second teaching the self propelled agricultural machine 1 as such is claimed. All above noted explanations are fully applicable on this agricultural machine 1.

According to a third teaching the control 4 for an above noted self propelled agricultural machine 1 as such is claimed. Again all above explanations are fully applicable on this control 4.

## Claims

1. Method for operating a self propelled agricultural machine (1), wherein the agricultural machine (1) comprises a traction drive (2), a service brake (3), a control (4) and a man machine interface including an accelerator pedal (5) and a brake pedal (6), wherein a user actuation of the brake pedal (6) causes the service brake (3) to be operated,
**characterized in**
**that** the user actuation, preferably the user actuation of the accelerator pedal (5), is being monitored by the control (4) in view of detecting a predetermined indication for an approaching user actuation of the brake pedal (6) - brake indication - and with said brake indication being detected at least one preparatory measure is being taken by the control (4) for the preparation of a user actuation of the brake pedal (6), which preparatory measure taken alone does not have a braking effect on the agricultural machine (1).

2. Method according to claim 1, **characterized in that** different preparatory measures are being taken by the control (4) depending on the brake indication being detected.

3. Method according to claim 1 or 2, **characterized in that** that the brake indication corresponds to a release of the accelerator pedal (5) with a predetermined accelerator pedal movement, preferably with an accelerator pedal movement exceeding a predetermined rate of movement.

4. Method according to one of the preceding claims, **characterized in that** if a predetermined reset condition is being detected by the control (4) the preparatory measure is being stopped or withdrawn, preferably, that the reset condition is that no user actuation of the brake pedal (6) is being detected within a predetermined time period after detecting a brake indication.

5. Method according to one of the preceding claims, **characterized in that** the preparatory measure is directed to configuring the agricultural machine (1), preferably the drive train (7) or the suspension (8) of the agricultural machine (1), by the control (4) to support the expected approaching operation of the service brake (3).

6. Method according to claim 5, **characterized in that** the agricultural machine (1) is designed as a four wheel drive machine with a four wheel drive clutch (9) between front wheels (10) and rear wheels (11) and that the preparatory measure is closing the four wheel drive clutch (9) of the agricultural machine (1), preferably, that the service brake (3) is provided only for the rear wheels (10) or the front wheels (11).

7. Method according to claim 5 or 6, **characterized in that** the stiffness of the suspension (8) of the agricultural machine (1) may be configured by the control (4) and that the preparatory measure is stiffening the suspension (8) in view of an improved brake performance.

8. Method according to one of the preceding claims, **characterized in that** the preparatory measure is directed to configuring the agricultural machine (1), preferably the passive safety system of the agricultural machine (1), by the control to improve the passenger crash safety in view of the expected approaching operation of the service brake (3).

9. Method according to claim 8, **characterized in that** the passive safety system comprises a component (12), preferably a headrest (12) or the like, which is moveable into a safety position by the control (4) for improving the passenger crash safety and that the preparatory measure is to move the component (12) into its safety position.

10. Method according to one of the preceding claims, **characterized in that** the agricultural machine (1) comprises a brake light system (13) and that the preparatory measure is the operation of the brake light system (13).

11. Method according to one of the preceding claims, **characterized in that** the agricultural machine (1) comprises a trailer with a trailer brake system and that the control (4) operates the trailer brake system as a function of the monitoring of the accelerator pedal (5).

12. Self propelled agricultural machine with a traction drive (2), a service brake (3), a control (4) and a man machine interface including an accelerator pedal (5) and a brake pedal (6), wherein a user actuation of the brake pedal (6) causes the service brake (3) to be operated,
preferably for performing the method according to one of the preceding claims, **characterized in**
**that** the control (4) monitors the user actuation, preferably the user actuation of the accelerator pedal (5), in view of detecting a predetermined indication for an approaching user actuation of the brake pedal (6) - brake indication - and with said brake indication being detected the control (4) takes at least one preparatory measure for the preparation of a user actuation of the brake pedal (6), which preparatory measure taken alone does not have a braking effect on the agricultural machine (1).

13. Control for a self propelled agricultural machine (1), which agricultural machine (1) comprises a traction drive (2), a service brake (3) and a man machine interface including an accelerator pedal (5) and a brake pedal (6), wherein a user actuation of the brake pedal (6) causes the service brake (3) to be operated,
preferably for performing the method of one of the claims 1 to 11, **characterized in**
**that** the control (4) monitors the user actuation, preferably the user actuation of the accelerator pedal (5), in view of detecting a predetermined indication for an approaching user actuation of the brake pedal (6) - brake indication - and with said brake indication being detected the control (4) takes at least one preparatory measure for the preparation of a user actuation of the brake pedal (6), which preparatory measure taken alone does not have a braking effect on the agricultural machine (1).

## Patentansprüche

1. Verfahren zum Betreiben einer selbstangetriebenen Landwirtschaftsmaschine (1), wobei die Landwirtschaftsmaschine (1) einen Fahrantrieb (2), eine Betriebsbremse (3), eine Steuerung (4) und eine Mensch-Maschine-Schnittstelle, einschließlich eines Fahrpedals (5) und eines Bremspedals (6), umfasst, wobei eine Benutzerbetätigung des Bremspedals (6) bewirkt, dass die Betriebsbremse (3) betätigt wird,
**dadurch gekennzeichnet,**
**dass** die Benutzerbetätigung, vorzugsweise die Benutzerbetätigung des Fahrpedals (5), angesichts des Detektierens eines vorbestimmten Anzeichens für eine bevorstehende Benutzerbetätigung des Bremspedals (6) - Bremsanzeichen - durch die Steuerung (4) überwacht wird, und wobei dadurch, dass das Bremsanzeichen detektiert wird, zumindest eine Vorbereitungsmaßnahme zur Vorbereitung einer Benutzerbetätigung des Bremspedals (6) durch die Steuerung (4) getroffen wird, wobei die Vorbereitungsmaßnahme für sich allein keine Bremswirkung auf die Landwirtschaftsmaschine (1) hat.

2. Verfahren nach Anspruch 1, **dadurch gekennzeichnet, dass** in Abhängigkeit von dem detektierten Bremsanzeichen verschiedene Vorbereitungsmaßnahmen durch die Steuerung (4) getroffen werden.

3. Verfahren nach Anspruch 1 oder 2, **dadurch gekennzeichnet, dass** das Bremsanzeichen einem Loslassen des Fahrpedals (5) mit einer vorbestimmten Fahrpedalbewegung, vorzugsweise mit einer Fahrpedalbewegung, die eine vorbestimmte Bewegungsgeschwindigkeit überschreitet, entspricht.

4. Verfahren nach einem der vorstehenden Ansprüche, **dadurch gekennzeichnet, dass**, wenn ein vorbestimmter Rücksetzzustand durch die Steuerung (4) detektiert wird, die Vorbereitungsmaßnahme gestoppt oder zurückgenommen wird, vorzugsweise, dass der Rücksetzzustand darin besteht, dass keine Benutzerbetätigung des Bremspedals (6) innerhalb einer vorbestimmten Zeitdauer nach dem Detektieren eines Bremsanzeichens detektiert wird.

5. Verfahren nach einem der vorstehenden Ansprüche, **dadurch gekennzeichnet, dass** sich die Vorbereitungsmaßnahme auf das Konfigurieren der Landwirtschaftsmaschine (1), vorzugsweise des Antriebsstrangs (7) oder der Federung (8) der Landwirtschaftsmaschine (1), durch die Steuerung (4) richtet, um den erwarteten bevorstehenden Betrieb der Betriebsbremse (3) zu unterstützen.

6. Verfahren nach Anspruch 5, **dadurch gekennzeichnet, dass** die Landwirtschaftsmaschine (1) als eine Allradantriebsmaschine mit einer Allradantriebskupplung (9) zwischen Vorderrädern (10) und Hinterrädern (11) konzipiert ist und dass die Vorbereitungsmaßnahme die Allradantriebskupplung (9) der Landwirtschaftsmaschine (1) schließt, vorzugsweise, dass die Betriebsbremse (3) nur für die Hinterräder (10) oder die Vorderräder (11) vorgesehen ist.

7. Verfahren nach Anspruch 5 oder 6, **dadurch gekennzeichnet, dass** die Steifigkeit der Federung (8) der Landwirtschaftsmaschine (1) durch die Steuerung (4) konfiguriert werden kann und dass die Vorbereitungsmaßnahme die Federung (8) angesichts einer verbesserten Bremsleistung versteift.

8. Verfahren nach einem der vorstehenden Ansprüche, **dadurch gekennzeichnet, dass** sich die Vorbereitungsmaßnahme auf das Konfigurieren der Landwirtschaftsmaschine (1), vorzugsweise des passiven Sicherheitssystems der Landwirtschaftsmaschine (1), durch die Steuerung richtet, um die Insassen-Crash-Sicherheit angesichts des erwarteten bevorstehenden Betriebs der Betriebsbremse (3) zu verbessern.

9. Verfahren nach Anspruch 8, **dadurch gekennzeichnet, dass** das passive Sicherheitssystem eine Komponente (12), vorzugsweise eine Kopfstütze (12) oder dergleichen, umfasst, die durch die Steuerung (4) zum Verbessern der Insassen-Crash-Sicherheit in eine Sicherheitsposition bewegbar ist, und dass die Vorbereitungsmaßnahme darin besteht, die Komponente (12) in ihre Sicherheitsposition zu bewegen.

10. Verfahren nach einem der vorstehenden Ansprüche, **dadurch gekennzeichnet, dass** die Landwirtschaftsmaschine (1) ein Bremslichtsystem (13) umfasst und dass die Vorbereitungsmaßnahme der Betrieb des Bremslichtsystems (13) ist.

11. Verfahren nach einem der vorstehenden Ansprüche, **dadurch gekennzeichnet, dass** die Landwirtschaftsmaschine (1) einen Anhänger mit einem Anhängerbremssystem umfasst und dass die Steuerung (4) das Anhängerbremssystem abhängig von dem Überwachen des Fahrpedals (5) betätigt.

12. Selbstangetriebene Landwirtschaftsmaschine mit einem Fahrantrieb (2), einer Betriebsbremse (3), einer Steuerung (4) und einer Mensch-Maschine-Schnittstelle, einschließlich eines Fahrpedals (5) und eines Bremspedals (6), wobei eine Benutzerbetätigung des Bremspedals (6) bewirkt, dass die Betriebsbremse (3) betätigt wird,
vorzugsweise zum Durchführen des Verfahrens nach einem der vorstehenden Ansprüche,
**dadurch gekennzeichnet,**
**dass** die Steuerung (4) die Benutzerbetätigung, vorzugsweise die Benutzerbetätigung des Fahrpedals (5), angesichts des Detektierens eines vorbestimmten Anzeichens für eine bevorstehende Benutzerbetätigung des Bremspedals (6) - Bremsanzeichen - überwacht, und wobei dadurch, dass das Bremsanzeichen detektiert wird, die Steuerung (4) zumindest eine Vorbereitungsmaßnahme zur Vorbereitung einer Benutzerbetätigung des Bremspedals (6) trifft, wobei die Vorbereitungsmaßnahme für sich allein keine Bremswirkung auf die Landwirtschaftsmaschine (1) hat.

13. Steuerung zum Betreiben einer selbstangetriebenen Landwirtschaftsmaschine (1), wobei die Landwirtschaftsmaschine (1) einen Fahrantrieb (2), eine Betriebsbremse (3) und eine Mensch-Maschine-Schnittstelle, einschließlich eines Fahrpedals (5) und eines Bremspedals (6), umfasst, wobei eine Benutzerbetätigung des Bremspedals (6) bewirkt, dass die Betriebsbremse (3) betätigt wird,
vorzugsweise zum Durchführen des Verfahrens nach einem der Ansprüche 1 bis 11,
**dadurch gekennzeichnet,**
**dass** die Steuerung (4) die Benutzerbetätigung, vorzugsweise die Benutzerbetätigung des Fahrpedals (5), angesichts des Detektierens eines vorbestimmten Anzeichens für eine bevorstehende Benutzerbetätigung des Bremspedals (6) - Bremsanzeichen - überwacht, und wobei dadurch, dass das Bremsanzeichen detektiert wird, die Steuerung (4) zumindest eine Vorbereitungsmaßnahme zur Vorbereitung einer Benutzerbetätigung des Bremspedals (6) trifft, wobei die Vorbereitungsmaßnahme für sich allein keine Bremswirkung auf die Landwirtschaftsmaschine (1) hat.

## Revendications

1. Procédé pour faire fonctionner une machine agricole autopropulsée (1), la machine agricole (1) comprenant un entraînement de traction (2), un frein de service (3), une commande (4) et une interface homme-machine comprenant une pédale d'accélérateur (5) et une pédale de frein (6), un actionnement par l'utilisateur de la pédale de frein (6) amenant le frein de service (3) à fonctionner,
**caractérisé en ce que**
l'actionnement par l'utilisateur, de préférence l'actionnement par l'utilisateur de la pédale d'accélérateur (5), est surveillé par la commande (4) en vue de détecter une indication prédéfinie pour un actionnement prochain par l'utilisateur de la pédale de frein (6) - indication de freinage - et, cette indication de freinage étant détectée, au moins une mesure préparatoire est prise par la commande (4) pour la préparation d'un actionnement par l'utilisateur de la pédale de frein (6), laquelle mesure préparatoire prise seule n'a pas d'effet de freinage sur la machine agricole (1).

2. Procédé selon la revendication 1, **caractérisé en ce que** différentes mesures préparatoires sont prises par la commande (4) en fonction de l'indication de freinage détectée.

3. Procédé selon la revendication 1 ou 2, **caractérisé en ce que** l'indication de freinage correspond à un relâchement de la pédale d'accélérateur (5) avec un mouvement de pédale d'accélérateur prédéfini, de préférence avec un mouvement de pédale d'accélérateur dépassant une vitesse de mouvement prédéfinie.

4. Procédé selon l'une des revendications précédentes, **caractérisé en ce que** si une condition de réinitialisation prédéfinie est détectée par la commande (4), la mesure préparatoire est arrêtée ou retirée, de préférence, **en ce que** la condition de réinitialisation est qu'aucun actionnement par l'utilisateur de la pédale de frein (6) n'est détecté dans une période de temps prédéfinie après la détection d'une indication de freinage.

5. Procédé selon l'une des revendications précédentes, **caractérisé en ce que** la mesure préparatoire a pour objet de configurer la machine agricole (1), de préférence la chaîne cinématique (7) ou la suspension (8) de la machine agricole (1), par la commande (4) pour soutenir l'actionnement prochain attendu du frein de service (3).

6. Procédé selon la revendication 5, **caractérisé en ce que** la machine agricole (1) est conçue comme une machine à quatre roues motrices avec un embrayage à quatre roues motrices (9) entre les roues avant (10) et les roues arrière (11) et **en ce que** la mesure préparatoire ferme l'embrayage à quatre roues motrices (9) de la machine agricole (1), de préférence, **en ce que** le frein de service (3) est fourni uniquement pour les roues arrière (10) ou les roues avant (11).

7. Procédé selon la revendication 5 ou 6, **caractérisé en ce que** la rigidité de la suspension (8) de la machine agricole (1) peut être configurée par la commande (4) et **en ce que** la mesure préparatoire raidit la suspension (8) en vue d'une performance de freinage améliorée.

8. Procédé selon l'une des revendications précédentes, **caractérisé en ce que** la mesure préparatoire a pour objet de configurer la machine agricole (1), de préférence le système de sécurité passive de la machine agricole (1), par la commande pour améliorer la sécurité des passagers en cas de collision en vue de l'actionnement prochain attendu du frein de service (3).

9. Procédé selon la revendication 8, **caractérisé en ce que** le système de sécurité passive comprend un composant (12), de préférence un appui-tête (12) ou similaire, qui peut être déplacé dans une position de sécurité par la commande (4) pour améliorer la sécurité des passagers en cas de collision et **en ce que** la mesure préparatoire consiste à déplacer le composant (12) dans sa position de sécurité.

10. Procédé selon l'une des revendications précédentes, **caractérisé en ce que** la machine agricole (1) comprend un système de feux de freinage (13) et **en ce que** la mesure préparatoire est l'actionnement du système de feux de freinage (13).

11. Procédé selon l'une des revendications précédentes, **caractérisé en ce que** la machine agricole (1) comprend une remorque avec un système de freinage de remorque et **en ce que** la commande (4) actionne le système de freinage de remorque en fonction de la surveillance de la pédale d'accélérateur (5).

12. Machine agricole autopropulsée avec un entraînement de traction (2), un frein de service (3), une commande (4) et une interface homme-machine comprenant une pédale d'accélérateur (5) et une pédale de frein (6), un actionnement par l'utilisateur de la pédale de frein (6) amenant le frein de service (3) à fonctionner,
de préférence pour exécuter le procédé selon l'une des revendications précédentes,
**caractérisée en ce que**
la commande (4) surveille l'actionnement par l'utilisateur, de préférence l'actionnement par l'utilisateur de la pédale d'accélérateur (5), en vue de détecter une indication prédéfinie pour un actionnement par l'utilisateur prochain de la pédale de frein (6) - indication de freinage - et ladite indication de freinage étant détectée, la commande (4) prend au moins une mesure préparatoire pour la préparation d'un actionnement par l'utilisateur de la pédale de frein (6), laquelle mesure préparatoire prise seule n'a pas d'effet de freinage sur la machine agricole (1).

13. Commande pour une machine agricole autopropulsée (1), laquelle machine agricole (1) comprend un entraînement de traction (2), un frein de service (3) et une interface homme-machine comprenant une pédale d'accélérateur (5) et une pédale de frein (6), un actionnement par l'utilisateur de la pédale de frein (6) amenant le frein de service (3) à fonctionner,
de préférence pour exécuter le procédé selon l'une des revendications 1 à 11,
**caractérisée en ce que**
la commande (4) surveille l'actionnement par l'utilisateur, de préférence l'actionnement par l'utilisateur de la pédale d'accélérateur (5), en vue de détecter une indication prédéfinie pour un actionnement par l'utilisateur prochain de la pédale de frein (6) - indication de freinage - et ladite indication de freinage étant détectée, la commande (4) prend au moins une mesure préparatoire pour la préparation d'un actionnement par l'utilisateur de la pédale de frein (6), laquelle mesure préparatoire prise seule n'a pas d'effet de freinage sur la machine agricole (1).
